# FASCICULE DE BREVET EUROPEEN

(11) **EP 1 112 977 B1**
(45) Date de publication et mention de la délivrance du brevet: **06.07.2011**
(21) Numéro de dépôt: 00403390.8
(22) Date de dépôt: 04.12.2000
(51) Int. Cl.: C03B 37/027, C03B 37/023, B29D 11/00

(54) **Procédé de refroidissement d'une fibre optique en cours de fibrage**
Verfahren zum Kühlen einer optischen Faser während des Ziehens
Process for cooling an optical fibre during drawing

(30) Priorité: 30.12.1999 FR 9916724
(43) Date de publication de la demande: 04.07.2001
(73) Titulaire: Draka Comteq B.V., 1083 HJ Amsterdam (NL)
(72) Inventeur: Guenot, Philippe, 78600 Maisons Laffitte (FR); Nicolardot, Marc, 95480 Pierrelaye (FR); Bourhis, Jean-François, 95150 Taverny (FR); Lainet, Eric, 78600 Maisons Laffitte (FR)
(74) Mandataire: Blokland, Arie

(56) Documents cités:
- EP-A- 0 887 319
- US-A- 5 928 574
- PATENT ABSTRACTS OF JAPAN vol. 18, no. 288, 2 juin 1994 (1994-06-02) & JP 06 056456 A (FUJIKURA LTD.), 1 mars 1994 (1994-03-01)
- DATABASE WPI Section Ch, Week 32 Derwent Publications Ltd., London, GB; Class F01, AN 97-347231 XP002144228 & JP 09 142890 A (SAMSUNG ELECTRONICS CO. LTD.), 3 juin 1997 (1997-06-03)
- PATENT ABSTRACTS OF JAPAN vol. 1998, no. 8, 30 juin 1998 (1998-06-30) & JP 10 067531 A (FURUKAWA ELECTRIC CO. LTD.), 10 mars 1998 (1998-03-10)
- PATENT ABSTRACTS OF JAPAN vol. 1998, no. 14, 31 décembre 1998 (1998-12-31) & JP 10 259036 A (SUMITOMO ELECTRIC IND. LTD.), 29 septembre 1998 (1998-09-29)
- PATENT ABSTRACTS OF JAPAN vol. 1997, no. 7, 31 juillet 1997 (1997-07-31) & JP 09 077527 A (FURUKAWA ELECTRIC CO. LTD.), 25 mars 1997 (1997-03-25)
- PATENT ABSTRACTS OF JAPAN vol. 7, no. 77, 30 mars 1983 (1983-03-30) & JP 58 009836 A (SHOWA DENSEN ELECTRIC WIRE CO. LTD.), 20 janvier 1983 (1983-01-20)

## Description

La présente invention concerne un procédé de refroidissement d'une fibre optique en cours de fibrage, par mise en contact avec au moins un fluide refroidisseur dans au moins une zone de refroidissement.

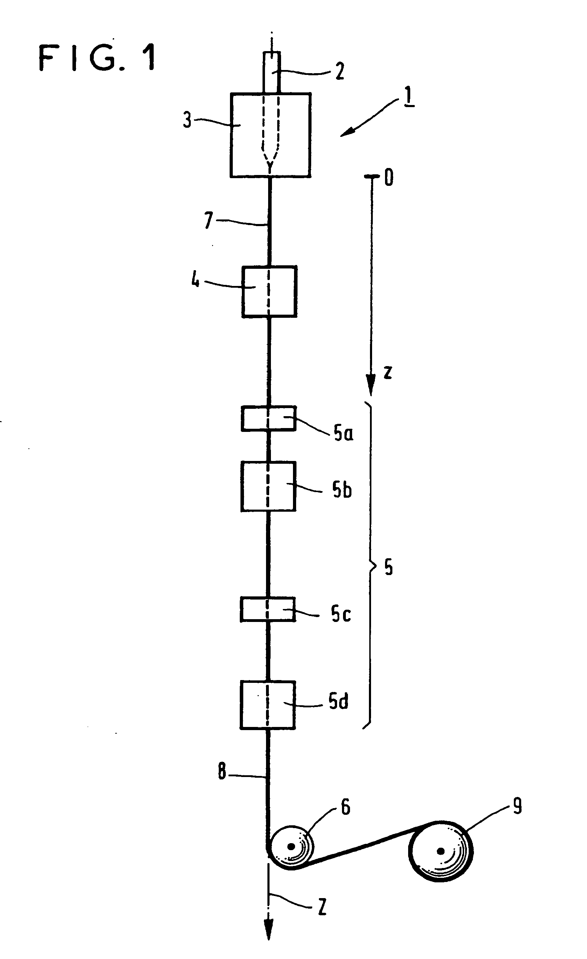

Il existe diverses catégories de fibres optiques : les fibres optiques à base de verre d'oxyde, les fibres optiques à base de verre de fluorure et les fibres optiques plastiques à base de matériau polymère. La fibre optique à base de verre d'oxyde, le plus souvent de verre de silice, est fabriquée par étirage à chaud, ou fibrage, à partir d'une préforme qui est un gros cylindre en verre de silice, éventuellement au moins partiellement dopée, de diamètre généralement compris entre 20 et 200 mm et de longueur généralement comprise entre 300 et 2000 mm. La figure 1 représente une vue schématique d'une tour 1 de fibrage. Une préforme 2 est fondue dans un four 3 de fibrage qui porte la température de la préforme à environ 2000 °C. Une fibre 7 ainsi obtenue est refroidie à l'air ambiant puis dans au moins un dispositif 4 de refroidissement, et enfin de nouveau à l'air ambiant avant d'être introduite dans un dispositif 5 de revêtement. La position du dispositif 4 de refroidissement sur la tour 1 de fibrage est généralement optimisée pour obtenir la bonne température de fibre au niveau de l'enduction de résine. Le dispositif 5 de revêtement réalise le revêtement de la fibre 7 par au moins une résine de revêtement le plus souvent réticulable aux ultraviolets. Le dispositif 5 comprend généralement au moins un dispositif (5a, 5c) d'injection suivi d'au moins un dispositif (5b, 5d) de réticulation. Dans le cas représenté sur la figure 1, le dispositif 5 comprend un dispositif 5a d'injection primaire de résine, suivi d'un dispositif 5b de réticulation de ladite résine par ultraviolet, puis un dispositif 5c d'injection secondaire de résine, suivi d'un dispositif 5d de réticulation de ladite résine par ultraviolet. Enfin une fibre optique 8 revêtue est tirée par un cabestan 6 puis enroulée sur une bobine 9 d'enroulement.

Les dispositifs présents au-dessous du four 3 de fibrage, situés selon un même axe vertical descendant Z, sont généralement repérés par leur position par rapport au bas du four 3 de fibrage, comme l'indique la cote z. Tous les éléments du dispositif illustré par la figure 1 sont bien connus de l'homme du métier. D'autres, qui ne sont pas représentés, sont également bien connus de l'homme du métier. C'est ainsi que par exemple des moyens de mesure du diamètre de la fibre non revêtue et/ou revêtue, des moyens de mesure de l'excentrement de la fibre dans le revêtement primaire et/ou secondaire et des moyens de mesure de la température de la fibre à une cote donnée appartiennent à la technique connue.

Le refroidissement doit permettre de porter la température de la fibre en sortie de four de fibrage à une température compatible avec l'application de résine de revêtement, c'est-à-dire de l'ordre de 50°C. En effet, la température de la fibre en sortie de four de fibrage est élevée, généralement de l'ordre de 1000 à 2000°C pour une fibre à base de silice selon le four de fibrage et la vitesse de fibrage utilisés. Le refroidissement de la fibre entre la sortie du four de fibrage et l'entrée du dispositif de revêtement est un des problèmes majeurs à résoudre au fibrage, et ce d'autant plus que l'on veut augmenter la vitesse de fibrage. En effet, il est bien connu que l'atténuation de la fibre dépend des conditions de refroidissement et de plus, si la température de la fibre à l'entrée du dispositif de revêtement est trop élevée, cela peut entraîner des problèmes, tant d'excentrement de la fibre dans son revêtement que de qualité dudit revêtement. Or la vitesse de fibrage des fibres à base de silice en production industrielle, qui était encore de 300 m/mn il y a quelques années, augmente de plus en plus pour atteindre aujourd'hui des valeurs de l'ordre de 1500 m/mn ou plus. Cette tendance se confirme de nos jours, liée à l'augmentation de la productivité qui est l'un des objectifs majeurs de l'industrie des fibres optiques.

Dans le cas d'une fabrication de fibres optiques à base de verre de fluorure, le principe du procédé est le même, mais la préforme est généralement de plus petite taille, généralement de 15 à 20 mm de diamètre pour une longueur maximum de quelques centimètres à quelques dizaines de centimètres, par exemple de 10 cm, et la température de sortie de four de fibrage est généralement comprise entre 300 et 450°C. Dans ce cas, il peut se poser le même problème technique. De la même façon dans le cas d'une fabrication de fibres optiques à base de matériau polymère, où la préforme est généralement de quelques dizaines de millimètres de diamètre, par exemple de 80 mm de diamètre, pour une longueur maximum de quelques dizaines de cm, par exemple de 50 cm, et la température de sortie de four de fibrage est généralement comprise entre 200 et 250°C, il peut se poser le même problème technique. Dans la suite de la description, on raisonne en terme de fibres optiques à base de silice, un raisonnement identique s'appliquant pour les autres types de fibres optiques, dont les fibres optiques à base de verre d'oxyde différent de la silice.

Pour refroidir la fibre à base de silice, divers dispositifs ont été mis en oeuvre. Une solution possible est d'augmenter la surface d'échange entre la fibre à refroidir et l'air ambiant, notamment par l'augmentation de la distance entre le four de fibrage et le dispositif de revêtement. Mais une telle solution impliquerait d'augmenter la hauteur des tours de fibrage actuellement utilisées, ce qui serait beaucoup trop coûteux principalement en terme d'investissement.

Une autre solution est d'augmenter l'efficacité du refroidissement sur la distance existant entre le four de fibrage et le dispositif de revêtement. En dehors du simple refroidissement à l'air ambiant qui s'avère très insuffisant pour les tours de fibrage actuellement utilisées, le principe commun des divers dispositifs utilisés en industrie, illustrés par exemple par la demande de brevet européen EP-A1-0.079.186, consiste en l'injection d'un gaz radialement vers la surface de la fibre à une cote donnée de la sortie du four de fibrage et la circulation dudit gaz, ascendante ou descendante, sur une certaine longueur de la fibre au coeur d'un tube d'échange. La conductivité thermique dudit gaz, connu par l'homme du métier comme étant généralement de l'air, du dioxyde de carbone, de l'azote, de l'argon ou de l'hélium, de façon préférée de l'hélium, est source d'un transfert thermique. De préférence, le tube est refroidi en périphérie à l'aide d'un fluide refroidisseur qui est généralement de l'eau. Par exemple le brevet US-A-4.761.168 décrit un perfectionnement de tels systèmes, en ce que l'on fait circuler du gaz le long de la fibre dans un tube d'échange de forme particulière, qui assure le remplacement régulier de la couche limite de gaz circulant le long de la fibre. Un tel perfectionnement vise à améliorer l'efficacité de l'échange thermique.

D'autre part, un des principaux problèmes que pose l'utilisation ultérieure de la fibre optique ainsi refroidie est que le refroidissement imposé à la fibre lors de sa fabrication, en sortie de four de fibrage et avant le passage en four de revêtement, peut faire remonter de manière sensible le niveau de la diffusion Rayleigh associée à la fibre, et donc augmenter la plus grande partie de l'atténuation que présente la fibre optique prête à être utilisée. Or on sait que l'atténuation de la fibre optique aux longueurs d'ondes utilisées, que celles-ci soient proches de 1310 nm ou de 1550 nm, doit être la plus faible possible pour transmettre au mieux le signal lumineux dans ladite fibre.

C'est pourquoi diverses solutions ont été proposées pour définir des profils de refroidissement, obtenus par des procédés et/ou dispositifs particuliers, qui minimisent la diffusion Rayleigh de la fibre. En général il est proposé de recourir au moins partiellement à des profils de refroidissement lents, c'est-à-dire plus lents qu'à l'air ambiant. Par exemple la demande de brevet DE-A1-37.13.029 indique la réalisation d'un refroidissement lent en sortie de four de fibrage.

Mais de tels procédés ne sont pas satisfaisants, en ce qu'ils ne permettent pas d'obtenir une baisse optimale de l'atténuation suffisante par rapport à l'atténuation théorique minimale.

La présente invention a pour but de pallier les inconvénients de systèmes de refroidissement de l'art antérieur, en permettant un refroidissement amélioré d'une fibre optique en cours de fibrage. Elle a notamment pour but, par rapport aux systèmes de refroidissement connus de l'art antérieur, de diminuer sensiblement la diffusion Rayleigh, et donc l'atténuation de la fibre fabriquée par un fibrage utilisant le procédé de refroidissement selon l'invention.

A cet effet, l'invention concerne procédé de refroidissement d'une fibre optique en cours de fibrage, par mise en contact avec au moins un fluide refroidisseur dans au moins une zone de refroidissement caractérisé en ce que ledit procédé est tel que l'on procède à un refroidissement rapide, éventuellement suivi d'un refroidissement à l'air ambiant, suivi d'un refroidissement lent, le refroidissement rapide étant un refroidissement moins lent qu'une refroidissement à l'air ambiant de sorte que le rapport des pentes de refroidissement en termes de dT/dt où T est la température de la fibre et t le temps soit supérieur à 1,1, pour passer d'une température initiale de la fibre à une température de ladite fibre à la sortie d'une zone de refroidissement rapide dans la zone de refroidissement rapide, quelle température à la sortie de la zone étant inférieur à la température initiale; le refroidissement à l'air ambiant étant un refroidissement optionnelle pour passer d'une température de la fibre à la sortie de la zone à une temperature de la fibre à l'entrée d'une zone de refroidissement lent dans une zone intermédiaire en ce cas de la température à la sortie de la zone est supérieur de la température à l'entrée de la zone; le refroidissement lent étant un refroidissement plus lent qu'un refroidissement à l'air ambiant de sorte que le rapport des pentes de refroidissement en termes de dT/dt où T est la température de la fibre et t le temps soit inférieur à 0,9, pour passer d'un température de la fibre à l'entrée de la zone refroidissement lent à une température finale de ladite fibre, dans la zone de refroidissement lent, quelle température à l'entrée de zone étant supérieur à la température finale; la température intermédiaire est la temperature dans la zone intermédiaire en ce cas de la température à la sortie de la zone est supérieur de la température à l'entrée de la zone; la température intermédiaire est égale à la température à la sortie de la zone et égale à la température à l'entrée de la zone en ce cas de la température à la sortie de la zone est égale à la température à l'entrée de la zone; et la température intermédiaire est sensiblement égale à une valuer critique associée à la diffusion Rayleigh du coeur de la fibre et la température intermédiaire étant comprise entre 1200 et 1700 °C dans le cas des fibres à base de verre de silice, entre 200 et 400 °C dan le cas des fibres à base de verre de fluorures, ou bien entre 150 et 250 °C dans le cas des fibres à base de matériau polymère.

La température de la fibre dans la zone intermédiaire est sensiblement égale à une voleur critique de la température telle que l'atténuation de la fibre obtenue par le procédé de fibrage est minimale.

En d'autres termes, une telle température, dite critique, est liée à la température de transition vitreuse associée à la diffusion Rayleigh du coeur de la fibre. La température de transition vitreuse associée à la diffusion Rayleigh est un paramètre thermodynamique caractéristique du désordre du verre, et plus précisément des hétérogénéités de densité qui contribuent à la diffusion Rayleigh. L'état de désordre atteint lors de la solidification du verre du coeur de la fibre est celui que l'on retrouvera sur la fibre finale après fibrage, et ce sont ces hétérogénéités de densité que l'on cherche à minimiser. Le procédé selon l'invention permet avantageusement d'obtenir une meilleure maîtrise du refroidissement de la fibre optique en conduisant à une minimisation des hétérogénéités de densité dans le verre.

Un des avantages du procédé selon l'invention est d'être adapté aux impératifs économiques, qui limitent la hauteur de la tour disponible pour le refroidissement, et qui font recourir à des vitesses de fibrage élevées. En effet, la présence d'une zone de refroidissement rapide permet de gagner en hauteur de tour de fibrage et/ou en vitesse de fibrage.

Un autre des avantages du procédé selon l'invention est que, par le fait d'intercaler une zone de refroidissement rapide entre le four de fibrage et une zone de refroidissement lent, l'atténuation de la fibre issue du procédé selon l'invention peut être significativement améliorée, toutes autres conditions égales par ailleurs. De plus, il est important d'appliquer le refroidissement rapide sur une plage de températures supérieure à ladite température critique, car si l'on effectue une trempe à cette température ou en dessous, l'effet sur la diffusion Rayleigh peut s'avérer désastreux et l'atténuation de la fibre finale peut augmenter de façon importante.

La longueur de la fibre dans la zone intermédiaire est de préférence la plus petite possible, compte tenu des impératifs technologiques sur la tour de fibrage.

Le refroidissement rapide de la zone de refroidissement rapide est strictement plus rapide, qu'un refroidissement à l'air ambiant. En d'autres termes, la pente instantanée du refroidissement rapide, dT/dt, où T est la température de la fibre et t le temps, a une valeur plus élevée pour un tel refroidissement que ladite pente instantanée pour un refroidissement de la fibre laissée à l'air ambiant dans la quasi-totalité de la zone de refroidissement rapide.

Le refroidissement lent de la zone de refroidissement lent est strictement plus lent, qu'un refroidissement à l'air ambiant . Généralement, la pente instantanée du refroidissement lent, dT/dt, où T est la température de la fibre et t le temps, a une valeur plus faible pour un tel refroidissement que ladite pente instantanée pour un refroidissement de la fibre laissée à l'air ambiant dans la quasi-totalité de la zone de refroidissement lent.

Le rapport des pentes instantanées du refroidissement rapide par rapport au refroidissement à l'air, en termes de dT/dt, où T est la température de la fibre et t le temps, est généralement strictement supérieur à 1,1, de façon plus préférée comprise entre 1,2 et 10 dans la zone de refroidissement rapide.

Avantageusement, la température initiale de la fibre à l'entrée de la zone de refroidissement rapide est environ égale à la température critique à laquelle on ajoute généralement entre 250 et 350°C, typiquement environ 300°C.

Le rapport des pentes instantanées du refroidissement lent par rapport au refroidissement à l'air, en termes de dT/dt, où T est la température de la fibre et t le temps, est généralement strictement inférieur à 0,9, de façon plus préférée comprise entre 0,05 et 0,8 dans la zone de refroidissement lent. Mais il est aussi possible dans le cadre de l'invention que la zone de refroidissement lent soit une zone de réchauffe, c'est-à-dire qu'au moins en partie dans ladite zone de refroidissement lent, le rapport des pentes instantanées du refroidissement lent par rapport au refroidissement à l'air, en termes de dT/dt, où T est la température de la fibre et t le temps, est négatif.

Avantageusement, la température finale de la fibre à la sortie de la zone de refroidissement lent est environ égale à la température critique à laquelle on soustrait généralement entre 50 et 950°C, typiquement environ 500°C.

Dans le cas d'un modèle structural idéal du verre, la pente dT/dt dans la zone de refroidissement rapide doit idéalement être la plus élevée possible, c'est-à-dire de valeur quasiment infinie; à l'inverse, la pente dT/dt dans la zone de refroidissement lent doit idéalement être la plus faible possible, c'est-à-dire de valeur quasiment nulle. Les limites du matériel ,les contraintes de dispositif et la non-idéalité de la structure vitreuse réelle conduisent à une valeur intermédiaire pour lesdites pentes, correspondant aux valeurs indiquées ci-dessus. Les profils thermiques exacts à l'intérieur des zones de refroidissement rapide et lent pourront être adaptés plus finement de manière à obtenir la diminution d'atténuation la plus forte possible, par exemple en subdivisant lesdites zones en sous zones à pentes locales adaptées. Dans l'exemple décrit ci-après, nous limitons le dispositif à deux zones homogènes.

La température critique dépend au premier ordre de la composition de la fibre. Ainsi, la demanderesse a constaté que, pour une fibre optique à base de silice standard à saut d'indice de norme CCITT G 652, ladite température critique est généralement comprise entre 1350 et 1550°C, de préférence entre 1450 et 1550°C. Par exemple elle est de 1500 ± 20 °C.

La présente invention, bien qu'illustrée pour les fibres en verre de silice, s'applique également aux autres catégories de fibres décrites précédemment, les plages de température étant adaptées en conséquence, par l'homme du métier.

Le refroidissement, qu'il soit lent ou rapide, est réalisé par tout dispositif connu de l'homme du métier. Le fluide refroidisseur est généralement choisi dans le groupe formé par l'air, le dioxyde de carbone, l'argon, l'azote et l'hélium. De préférence ledit fluide est l'hélium.

L'invention sera mieux comprise et d'autres caractéristiques et avantages apparaîtront à la lecture de la description qui va suivre, donnée à titre non limitatif, par référence aux figures 1 à 3.
La figure 1 représente une vue schématique d'un dispositif de fibrage incorporant un dispositif de refroidissement de fibre optique selon l'art antérieur.
La figure 2 représente une vue schématique d'un dispositif de fibrage incorporant un dispositif de refroidissement de fibre optique selon le procédé de l'invention.
La figure 3 représente une vue schématique d'un dispositif de refroidissement de fibre optique selon une mise en oeuvre particulière du procédé de invention.

La figure 1 a été précédemment décrite en relation avec l'art antérieur. La tour 1 de fibrage 1 comporte un four 3 de fibrage, un dispositif 4 de refroidissement selon l'art antérieur, un dispositif 5 de revêtement, un cabestan 6 et une bobine 9 d'enroulement.

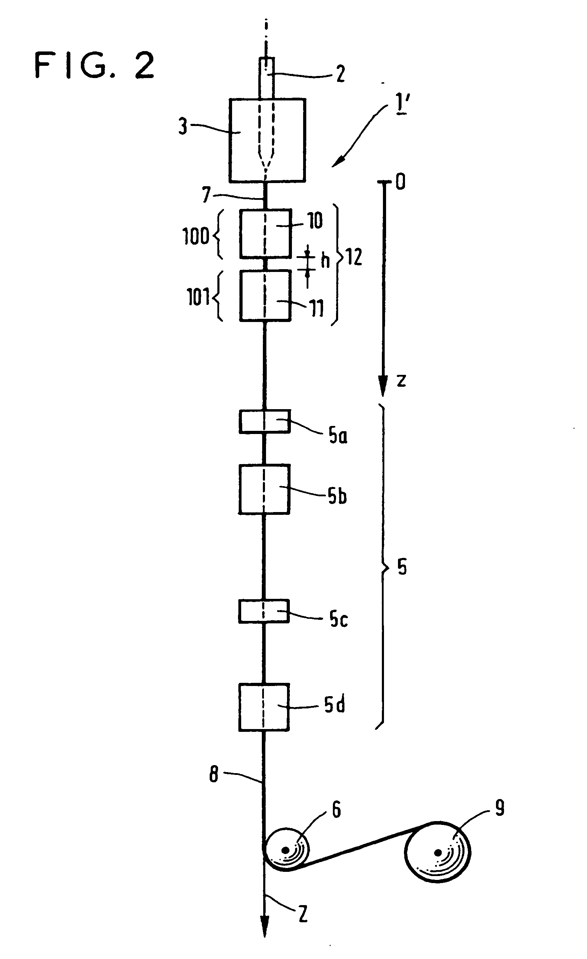

La figure 2 représente une tour l' de fibrage, qui reprend tous les éléments de la figure 1, à l'exception du dispositif 12 de refroidissement qui est selon le procédé de l'invention. Ledit dispositif 12 de refroidissement comprend un premier dispositif 10 de refroidissement rapide, qui définit une zone 100 de refroidissement rapide, et un second dispositif 11 de refroidissement lent, qui définit une zone 101 de refroidissement lent. Les deux dispositifs sont placés l'un au-dessus de l'autre de façon à ce que la hauteur h de la fibre 7 qui est à l'air ambiant entre lesdits deux dispositifs 10 et 11 soit la plus petite possible, compte tenu des impératifs technologiques et/ou économiques sur la tour l'de fibrage. Typiquement une telle hauteur est de quelques centimètres, généralement comprise entre 0 et 15 cm, par exemple de 10 cm. Idéalement une telle hauteur est nulle.

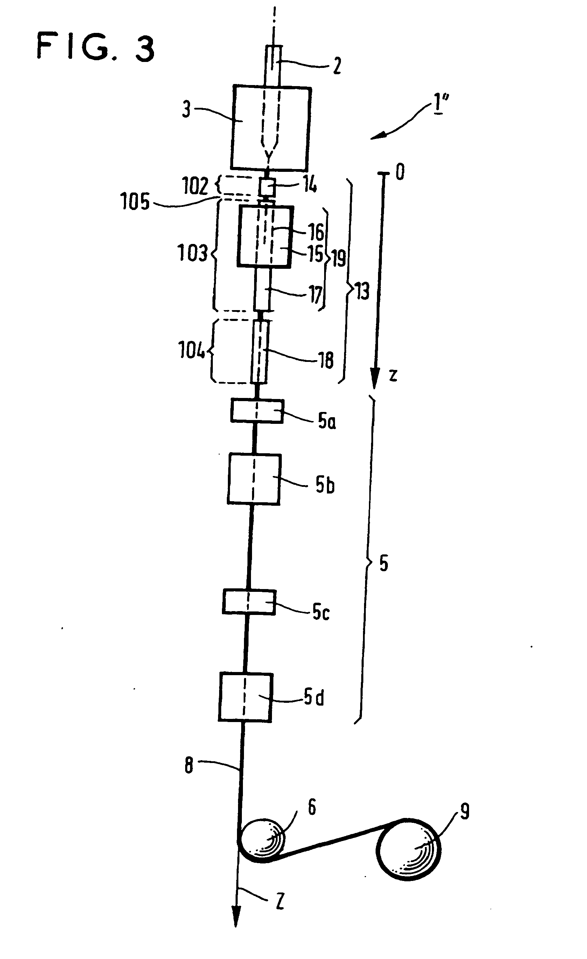

La figure 3 représente une tour 1" de fibrage, qui reprend tous les éléments des figures 1 et 2, à l'exception du dispositif 13 de refroidissement qui est une mise en oeuvre particulière du procédé de l'invention. Le dispositif 13 de refroidissement est composé d'un tube 14 de refroidissement rapide selon l'invention, d'un dispositif 19 de refroidissement lent, ainsi que d'un dispositif 18 de refroidissement rapide. Le tube 14 de refroidissement rapide, appelé aussi tube de trempe, définit une zone 102 de refroidissement rapide. Le tube 14 est suivi sur la tour de fibrage 1", dans le sens de parcours de la fibre 7, par le dispositif 19 de refroidissement lent. Le dispositif 19, qui définit une zone 103 de refroidissement lent, consiste en un four 15 dit four de réchauffe, entourant un premier tube 16, et un second tube 17 dit tube d'extension. Enfin le dispositif 18 de refroidissement rapide est un tube qui définit une zone 104 de refroidissement rapide.

Selon une variante, seuls les dispositifs 14 et 19 sont présents, la présence du tube 18 ne s'avérant pas nécessaire par exemple pour des raisons d'espace suffisant pour refroidir la fibre 7 à l'air ambiant entre la sortie du dispositif 19 de refroidissement lent et l'entrée du dispositif 5 de revêtement. A l'inverse, la présence d'un dispositif de refroidissement rapide tel le tube 18 peut s'avérer nécessaire pour que la fibre 7 atteigne la température d'entrée dans le dispositif 5 de revêtement dans l'espace disponible. A cette cote, le dispositif 18 ne peut pratiquement plus agir sur les propriétés mécaniques et/ou optiques de la fibre 7, les différents constituants de la fibre 7 étant suffisamment figés en sortie du dispositif 19 de refroidissement lent.

L'exemple qui suit illustre un mode particulier de réalisation de l'invention, sans pour autant en limiter la portée.

### Exemple

On utilise, sur une tour de fibrage 1" du type de celle schématisée sur la figure 3, à l'exception du tube 18 qui est absent du procédé selon l'exemple, un dispositif de refroidissement 13 selon l'invention tel que celui représenté sur la figure 3. La fibre revêtue réalisée au sein de ladite tour 1" est une fibre standard à base de silice, de norme G 652.

Le tube 14 est un tube de longueur 25 cm, la température de sa paroi étant maintenue à 15°C par échange avec un fluide caloporteur qui est l'eau. Il est situé à 9 cm au-dessous du four de fibrage. Le tube 14 définit la zone 102 de refroidissement rapide selon l'invention, appelée aussi zone 102 de trempe. A l'intérieur de ce tube, il circule un fluide refroidisseur qui est de l'hélium gazeux. Le débit d'hélium peut être ajusté de façon à faire varier la température de la fibre en sortie dudit tube 14. Dans l'exemple, ledit débit est fixé à 11/min et la température de la fibre en zone 105, dite température intermédiaire, est alors de 1500°C.

Le dispositif 19 de refroidissement lent, de longueur totale 399 cm, se compose d'un tube 16 en quartz, sur la paroi duquel on fait circuler de l'argon à un débit de 7 I/mn. Le tube 16 est de longueur 159 cm, et est situé au-dessous du tube 14 à une distance de 8 cm, qui définit une zone 105, ce qui permet de mettre en place une mesure de la température de la fibre 7 dans ladite zone 105. A une distance de 17 cm à partir du haut du tube 16 et sur une longueur de 83 cm, se situe un four 15 de réchauffe qui enserre une partie du tube 16 et qui chauffe la paroi dudit tube 16 à une température de 1050°C. Le dispositif 19 de refroidissement lent comporte de plus un tube 17 de 240 cm situé juste au-dessous du tube 16. Dans l'exemple, la température de la fibre en sortie de ce tube est de 925°C.

Le dispositif 13 de refroidissement peut en outre comprendre un tube 18 de refroidissement rapide, ce qui n'a pas été exemplifié ici.

La vitesse de fibrage est de 900 m/mn, la température de la fibre 7 en sortie de four de fibrage 3 est de 1800°C. La distance entre le dispositif 19 de refroidissement lent et le tube 18 de refroidissement rapide est de 2m.

Pour un dispositif selon l'invention donné, tel que décrit dans l'exemple à la figure 3, la démarche de l'homme du métier, pour une composition de fibre donnée et une vitesse de fibrage donnée, est donc de chercher à déterminer la température intermédiaire optimale en zone 105, par quelques tests, de façon à prédéterminer la température critique pour les productions de fibres ultérieures. Ainsi il aura déterminé la configuration optimale du procédé de fibrage de façon à ce que la fibre optique finale obtenue par ledit fibrage présente une atténuation minimale. Ci-après est donné un exemple de la mise en oeuvre desdits tests.

Lesdits tests consistent à faire varier la température de la fibre 7 en zone 105, en modifiant le débit d'hélium gazeux injecté dans le tube 14, afin de mettre en évidence la température intermédiaire optimale en zone 105. Cette mise en évidence s'effectue grâce à la mesure de l'atténuation de la fibre obtenue à une température mesurée en zone 105 donnée. Chaque test d'atténuation est réalisé sur 25 km de fibre 7. Dans cet exemple, l'ensemble des tests a donc conduit à réaliser six fibres 7 différentes, numérotées de 1 à 6.

Le résultat des tests est donné dans le tableau suivant :

| Fibre n° | Température de la fibre 7 en zone 105 (°C) | Atténuation de la fibre 8 obtenue à 1550 nm (dB/km) |
|---|---|---|
| 1 | 1550 | 0,1910 |
| 2 | 1500 | 0,1897 |
| 3 | 1450 | 0,1917 |
| 4 | 1400 | 0,1920 |
| 5 | 1350 | 0,1931 |
| 6 | 1280 | 0,1941 |

A titre indicatif, dans le cas de l'art antérieur où il existe seulement un refroidissement lent, par exemple par la seule présence de la zone 19, l'atténuation de ladite fibre est de 0,1910 dB/km.

Le tableau précédent fait apparaître une température intermédiaire optimale, qui est d'environ 1500°C, pour laquelle l'atténuation de la fibre est minimale, toutes conditions égales par ailleurs.

La fibre optique revêtue 8 issue de la tour de fibrage ainsi exemplifiée et ayant subi une étape de refroidissement comprenant un refroidissement 14 rapide suivi d'un refroidissement 19 lent selon l'invention présente donc des propriétés optiques améliorées, principalement en termes d'atténuation, par rapport à une fibre réalisée dans les conditions de l'art antérieur. Par ailleurs, la présence de la zone de refroidissement rapide autorise un fibrage à plus haute vitesse, sans nécessité d'augmenter la hauteur de la tour de fibrage.

Bien entendu le procédé selon l'invention ne se limite pas aux représentations décrites ci-dessus. En particulier, il est possible de placer le dispositif 13 de refroidissement entre le bas du four 3 de fibrage et le haut du dispositif 5 de revêtement, à toute cote du bas du four 3 de fibrage, du moment que la température de la fibre dans une zone intermédiaire située entre les deux zones de refroidissement soit environ égale à la température critique.

## Revendications

1. Procédé de refroidissement d'une fibre optique (7) en cours de fibrage, par mise en contact avec au moins un fluide refroidisseur dans au moins une zone de refroidissement (10, 11, 14, 19, 18),**caractérisé en ce que** ledit procédé est tel que l'on procède à un refroidissement (10,14) rapide,éventuellement suivi d'un refroidissement à l'air ambiant, suivi d'un refroidissement lent (11,19), le refroidissement rapide étant un refroidissement moins lent qu'une refroidissement à l'air ambiant de sorte que le rapport des pentes de refroidissement en termes de dT/dt où T est la température de la fibre (7) et t le temps soit supérieur à 1,1, pour passer d'une température initiale de la fibre (7) à une température de ladite fibre (7) à la sortie d'une zone (100, 102) de refroidissement rapide dans la zone (100, 102) de refroidissement rapide, quelle température à la sortie de la zone (100, 102) étant inférieur à la température initiale; le refroidissement à l'air ambiant étant un refroidissement optionnelle pour passer d'une température de la fibre (7) à la sortie de la zone (100, 102) de refroidissement rapide à une temperature de la fibre (7) à l'entrée d'une zone (101,103) de refroidissement lent dans une zone (105) intermédiaire en ce cas de la température à la sortie de la zone (100, 102) de refroidissement rapide est supérieur de la température à l'entrée de la zone (101, 103) de refroidissement lent; le refroidissement lent étant un refroidissement plus lent qu'un refroidissement à l'air ambiant de sorte que le rapport des pentes de refroidissement en termes de dT/dt où T est la température de la fibre (7) et t le temps soit inférieur à 0,9, pour passer d'un température de la fibre (7) à l'entrée de la zone (101, 103) refroidissement lent à une température finale de ladite fibre (7), dans la zone (101, 103) de refroidissement lent, quelle température à l'entrée de zone (101, 103) de refroidissement lent étant supérieur à la température finale; la température intermédiaire est la temperature dans la zone (105) intermédiaire en ce cas de la température à la sortie de la zone (100, 102) de refroidissement rapide est supérieur de la température à l'entrée de la zone (101, 103) de refroidissement lent; la température intermédiaire est égale à la température à la sortie de la zone (100, 102) de refroidissement rapide et égale à la température à l'entrée de la zone (101, 103) en ce cas de la température à la sortie de la zone (100, 102) de refroidissement rapide est égale à la température à l'entrée de la zone (101, 103) de refroidissement lent; et la température intermédiaire est sensiblement égale à une valeur critique associée à la diffusion Rayleigh du coeur de la fibre et la température intermédiaire étant comprise entre 1200 et 1700 °C dans le cas des fibres à base de verre de silice, entre 200 et 400 °C dan le cas des fibres à base de verre de fluorures, ou bien entre 150 et 250 °C dans le cas des fibres à base de matériau polymère.

2. Procédé selon la revendication 1 tel que la température de la fibre (7) à la sortie de la zone (100, 102) et la température de la fibre (7) à l'entree de la zone (101,103) sont sensiblement égales entre elles de manière à rendre minimale l'atténuation de la fibre optique.

3. Procédé selon l'une revendications 1 ou 2 tel que la longueur de la fibre (7) dans la zone intermédiaire (105) est la plus petite possible.

4. Procédé selon l'une des revendications 1 à 3 tel que ledit rapport des pentes est compris entre 1,2 et 10 dans la zone de refroidissement rapide (100, 102).

5. Procédé selon l'une des revendications 1 à 4 tel que la température initiale de la fibre (7) à l'entrée de la zone de refroidissement rapide (100, 102) est égale à la température critique à laquelle on ajoute entre 250 et 350 °C.

6. Procédé selon la revendication 5 tel que la température initiale de la fibre (7) à l'entrée de la zone de refroidissement rapide (100, 102) est égale à la température critique à laquelle on ajoute 300 °C.

7. Procédé selon l'une des revendications 1 à 6 tel que ledit rapport des pentes est compris entre 0,05 et 0,8 dans la zone (101, 103) de refroidissement lent.

8. Procédé selon l'une des revendications 1 à 7 tel que la température finale de la fibre (7) à la sortie de la zone (101, 103) de refroidissement lent est égale à la température critique à laquelle on soustrait entre 50 et 950 °C.

9. Procédé selon la revendication 8 tel que la température finale de la fibre (7) à la sortie de la zone (101, 103) de refroidissement lent est égale à la température critique à laquelle on soustrait 500 °C.

10. Procédé selon l'une des revendications 1 à 9 tel que, pour une fibre optique (8) à base de silice standard à saut d'indice de norme CCITT G 652, ladite température critique est comprise entre 1350 et 1550°C.

## Claims

1. Method of cooling an optical fibre (7) in the course of drawing-out, by bringing it into contact with at least one cooling fluid in at least one cooling zone (10, 11, 14, 19, 18), **characterised in that** said method is such that rapid cooling (10, 14) is carried out, optionally followed by cooling in ambient air, followed by slow cooling (11, 19), the rapid cooling being cooling that is less slow than cooling in ambient air so that the ratio of the cooling slopes in terms of dT/dt, where T is the temperature of the fibre (7) and t is time, is greater than 1.1, in order to pass, in a zone (100, 102) of rapid cooling, from an initial temperature of the fibre (7) to a temperature of said fibre (7) at the exit from the zone (100, 102) of rapid cooling, which temperature at the exit from the zone (100, 102) is less than the initial temperature; the cooling in ambient air being optional cooling in order to pass, in an intermediate zone (105), from a temperature of the fibre (7) at the exit from the zone (100, 102) of rapid cooling to a temperature of the fibre (7) at the entry to a zone (101, 103) of slow cooling when the temperature at the exit from the zone (100, 102) of rapid cooling is greater than the temperature at the entry to the zone (101, 103) of slow cooling; the slow cooling being cooling that is slower than cooling in ambient air so that the ratio of the cooling slopes in terms of dT/dt, where T is the temperature of the fibre (7) and t is time, is less than 0.9, in order to pass, in the zone (101, 103) of slow cooling, from a temperature of the fibre (7) at the entry to the zone (101, 103) of slow cooling to a final temperature of said fibre (7), which temperature at the entry to the zone (101, 103) of slow cooling is greater than the final temperature; the intermediate temperature is the temperature in the intermediate zone (105) when the temperature at the exit from the zone (100, 102) of rapid cooling is greater than the temperature at the entry to the zone (101, 103) of slow cooling; the intermediate temperature is equal to the temperature at the exit from the zone (100, 102) of rapid cooling and equal to the temperature at the entry to the zone (101, 103) of slow cooling when the temperature at the exit from the zone (100, 102) of rapid cooling is equal to the temperature at the entry to the zone (101, 103) of slow cooling; and the intermediate temperature is substantially equal to a critical value associated with the Rayleigh scattering of the core of the fibre and the intermediate temperature being between 1200 and 1700°C inclusive in the case of silica-glass-based fibres, between 200 and 400°C inclusive in the case of fluoride-glass-based fibres, or between 150 and 250°C inclusive in the case of polymer-material-based fibres.

2. Method according to claim 1, wherein the temperature of the fibre (7) at the exit from the zone (100, 102) and the temperature of the fibre (7) at the entry to the zone (101, 103) are substantially equal to one another so as to minimise the attenuation of the optical fibre.

3. Method according to one of claims 1 or 2, wherein the length of fibre (7) in the intermediate zone (105) is as small as possible.

4. Method according to one of claims 1 to 3, wherein said ratio of the slopes is between 1.2 and 10 inclusive in the zone of rapid cooling (100, 102).

5. Method according to one of claims 1 to 4, wherein the initial temperature of the fibre (7) at the entry to the zone of rapid cooling (100, 102) is equal to the critical temperature to which there is added between 250 and 350°C.

6. Method according to claim 5, wherein the initial temperature of the fibre (7) at the entry to the zone of rapid cooling (100, 102) is equal to the critical temperature to which there is added 300°C.

7. Method according to one of claims 1 to 6, wherein said ratio of the slopes is between 0.05 and 0.8 inclusive in the zone (101, 103) of slow cooling.

8. Method according to one of claims 1 to 7, wherein the final temperature of the fibre (7) at the exit from the zone (101, 103) of slow cooling is equal to the critical temperature from which there is subtracted between 50 and 950°C.

9. Method according to claim 8, wherein the final temperature of the fibre (7) at the exit from the zone (101, 103) of slow cooling is equal to the critical temperature from which there is subtracted 500°C.

10. Method according to one of claims 1 to 9, wherein for a stepped-index standard silica-based optical fibre (8) according to CCITT Standard G 652 said critical temperature is between 1350 and 1550°C inclusive.

## Patentansprüche

1. Verfahren zum Abkühlen einer optischen Faser (7) beim Faserziehen, durch in Kontakt bringen mit mindestens einem abkühlenden Fluid in mindestens einer Zone des Abkühlens (10, 11, 14, 19, 18), **dadurch gekennzeichnet, dass** das Verfahren derart ist, dass zu einem schnellen Abkühlen (10, 14) vorgegangen wird, möglicherweise gefolgt von einem Abkühlen in Umgebungsluft gefolgt von einem langsamen Abkühlen (11, 19), wobei das schnelle Abkühlen ein weniger langsames Abkühlen ist als ein Abkühlen in Umgebungsluft derart, dass das Verhältnis der Steigungen des Abkühlens ausgedrückt durch dT/dt, wobei T die Temperatur der Faser (7) ist und t die Zeit, größer ist als 1,1, um von einer anfänglichen Temperatur der Faser (7) zu einer Temperatur der Faser (7) am Ausgang einer Zone (100, 102) des schnellen Abkühlens in der Zone (100, 102) des schnellen Abkühlens überzugehen, wobei die Temperatur am Ausgang der Zone (100, 102) kleiner ist als die anfänglich Temperatur, wobei das Abkühlen in Umgebungsluft ein optionales Abkühlen ist, um von einer Temperatur der Faser (7) am Ausgang der Zone (100, 102) des schnellen Abkühlens zu einer Temperatur der Faser (7) am Eingang einer Zone (101, 103) des langsamen Abkühlens in einer Zwischenzone (105) überzugehen, wobei in diesem Fall die Temperatur am Ausgang der Zone (100, 102) des schnellen Abkühlens größer ist als die Temperatur am Eingang der Zone (101, 103) des langsamen Abkühlens, wobei das langsame Abkühlen ein langsameres Abkühlen als ein Abkühlen in Umgebungsluft derart ist, dass das Verhältnis der Steigungen des Abkühlens ausgedrückt durch dT/dt, wobei T die Temperatur der Faser (7) und t die Zeit ist, kleiner als 0,9 ist, um von einer Temperatur der Faser (7) am Eingang der Zone (101, 103) des langsamen Abkühlens zu einer Endtemperatur der Faser (7) in der Zone (101, 103) des langsamen Abkühlens überzugehen, wobei die Temperatur am Eingang der Zone (101, 103) des langsamen Abkühlens größer ist als die Endtemperatur, wobei die Zwischentemperatur die Temperatur in der Zwischenzone (105) in dem Fall ist, in dem die Temperatur am Ausgang der Zone (100, 102) des schnellen Abkühlens größer ist als die Temperatur am Eingang der Zone (101, 103) des langsamen Abkühlens, wobei die Zwischentemperatur gleich der Temperatur am Ausgang der Zone (100, 102) des schnellen Abkühlens und gleich der Temperatur am Eingang der Zone (101, 103) des langsamen Abkühlens in dem Fall ist, in dem die Temperatur am Ausgang der Zone (100, 102) des schnellen Abkühlens gleich der Temperatur am Eingang der Zone (101, 103) des langsamen Abkühlens ist, und die Zwischentemperatur im Wesentlichen gleich einem kritischen Wert ist, welcher mit der Rayleigh-Diffusion des Kerns der Faser verknüpft ist, und wobei die Zwischentemperatur zwischen 1200 und 1700 °C im Falle von Fasern auf Basis von Silikatglas, zwischen 200 und 400 °C im Fall von Fasern auf Basis von Fluorglas oder auch zwischen 150 und 250 °C im Falle von Fasern auf Basis von Polymermaterial enthalten ist.

2. Verfahren nach Anspruch 1 derart, dass die Temperatur der Faser (7) am Ausgang der Zone (100, 102) und die Temperatur der Faser (7) am Eingang der Zone (101, 103) untereinander im Wesentlichen derart gleich sind, dass die Dämpfung der optischen Faser minimal gemacht wird.

3. Verfahren nach einem der Ansprüche 1 oder 2 derart, dass die Länge der Faser (7) in der Zwischenzone (105) kleinstmöglich ist.

4. Verfahren nach einem der Ansprüche 1-3 derart, dass das Verhältnis der Steigungen zwischen 1,2 und 10 in der Zone des schnellen Abkühlens (100, 102) enthalten ist.

5. Verfahren nach einem der Ansprüche 1-4 derart, dass die anfängliche Temperatur der Faser (7) am Eingang der Zone des schnellen Abkühlens (100, 102) gleich der kritischen Temperatur, zu welcher zwischen 250 und 350 °C hinzuaddiert wird, ist.

6. Verfahren nach Anspruch 5 derart, dass die anfängliche Temperatur der Faser (7) am Eingang der Zone des schnellen Abkühlens (100, 102) gleich der kritischen Temperatur, zu welcher 300 °C hinzuaddiert wird, ist.

7. Verfahren nach einem der Ansprüche 1-6 derart, dass das Verhältnis der Steigungen zwischen 0,05 und 0,8 in der Zone (101, 103) des langsamen Abkühlens enthalten ist.

8. Verfahren nach einem der Ansprüche 1-7 derart, dass die Endtemperatur der Faser (7) am Ausgang der Zone (101, 103) des langsamen Abkühlens gleich der kritischen Temperatur, von der zwischen 50 und 950 °C subtrahiert wird, ist.

9. Verfahren nach Anspruch 8 derart, dass die Endtemperatur der Faser (7) am Ausgang der Zone (101, 103) des langsamen Abkühlens gleich ist der kritischen Temperatur, von welcher 500 °C subtrahiert wird, ist.

10. Verfahren nach einem der Ansprüche 1-9 derart, dass für eine optische Standardfaser (8) auf Basis von Silizium mit Indexsprung gemäß der Norm CTITT G 652 die kritische Temperatur zwischen 1350 und 1550 °C enthalten ist.
